# EUROPEAN PATENT APPLICATION

(11) **EP 4 592 227 A1**
(43) Date of publication of application: **30.07.2025**
(21) Application number: 24154311.5
(22) Date of filing: 29.01.2024
(51) Int. Cl.: B65G 69/28

(54) **DOCK LEVELER HAVING BLADE VEHICLE BARRIER ATTACHED ON THE LIP**

(71) Applicant: Gkouzkouris, Athanasios, 60062 Korinos (GR)
(72) Inventor: The designation of the inventor has not yet been filed

(57) **Abstract**

A dock leveler features a barrier that follows the motion of the lip (1). This barrier consists of multiple blades (2) designed to be concealed under the level of the deck (3) when the lip (1) is extended. As the lip (1) descends, it rotates on its axle (4) along with the blades (2) attached to its lower part, causing them to pass through the specially designed slots (5) of the deck. As the lip (1) ascends, it causes the blades (2) to be concealed once again under the level of the deck (3).

## Description

This invention refers to dock loading equipment, specifically a dock leveler assembly with an automatically protruding blade barrier attached on the lip to prevent vehicles from accidentally running off the front end.

Dock levelers are commonly used for loading and unloading vehicles at dock platforms, featuring a deck that adjusts to varying heights. They typically include a pivotal plate or lip at the front end to bridge the gap between the leveler and the vehicle bed. A safety concern arises when forklift trucks or similar equipment might run off the exposed dock end without a parked vehicle nearby.

Various methods have been proposed to address this issue involving a lip extending to the rear forming a barrier when the lip falls or a slotted lip that automatically retracts when the leveler is moved from its stored position. However, these designs have weaknesses, including structural vulnerabilities, unnecessary complexity and they cannot be easily fixed after an incident.

This invention aims to overcome these drawbacks by providing a dock leveler assembly with an automatically protruding blade barrier that addresses safety concerns during end loading and it is easily replaced in case of damage.

Given the deficiencies in the prior art, it is an object of this invention to provide an improved barrier for dock levelers that is caused by the folding of the lip. With this mode of implementation, the barrier will be effective during end loading.

Yet another object of this invention is to provide a barrier usable with a dock leveler that retains the strength and simplicity of the conventional lip and hinge structure of dock levelers.

Additional object of this invention is to provide a barrier, whose geometry minimizes the possibility of human body part entrapment during its actuation as well as the possibility of injury during impact.

These and other objects of this invention are accomplished by means of an automatic vehicle barrier which consists of multiple blades designed to be concealed under the deck when the lip is extended. The lip carries with it blades that rotate with the lip on the same rotational axle. The barrier automatically raises every time the lip is lowered with the blades attached to its lower part caused to pass through the specially designed slots of the deck. Conversely, when the lip is raised by means of actuation of the deck assembly, the blades pivot with the lip when it rotates, causing the blades to be concealed once again under the deck. Given the fact that the barrier blades are supported on the axle that is mounted on the structural elements of the deck assembly, it provides additional strength to the whole assembly.

In addition, the blades can easily be replaced after an incident with low cost making the leveler available for operation again shortly. This reduces the collateral costs by the pause of the operation which are often higher than the cost of the whole dock lever itself. The simplicity of the replacement is another big advantage of this invention as it reduces the required level of experience needed for repairing.

This invention will be described in greater detail by referring to the attached drawing and the description of the preferred embodiment which follows.

In the drawings:
FIG. 1 is a side elevation view of a dock leveler with the lip extended illustrating the position of the automatic vehicle barrier in accordance with this invention.
FIG. 2 is an enlarged cross section of the preferred embodiment of FIG. 1 showing additional details of the automatic barrier of the first embodiment.
FIG. 3 is a 3D representation of the dock leveler with the lip extended.
FIG. 4 is a side elevation view of a dock leveler with the lip descended illustrating the position of the automatic vehicle barrier in accordance with this invention.
FIG. 5 is an enlarged cross section of the preferred embodiment of FIG. 4 showing additional details of the automatic barrier of the first embodiment.
FIG. 6 is a 3D representation of the dock leveler with the lip descended.

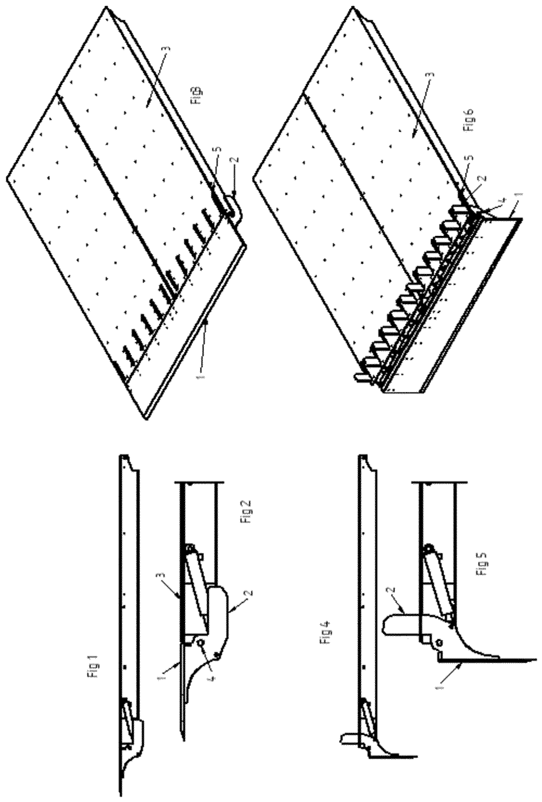

Referring to the drawings Fig 1-6, a dock leveler blade(2) barrier in accordance with the preferred embodiment of the present invention comprises a lip (1) that has blades (2) fixed on the lower part, an axle(4) that is the rotational axle of both the lip (1) and the blades (2) and the deck (3) which has slots (5) designed in order the blades(2) to pass through.

The blades (2) can be either welded or fixed with bolds on the lip (1) to be easily replaced. The blade (2) has either one hole in order the axle (4) to pass through or the hole is not closed shape for making the replacement the blade immediate without removing the axle (4) or the other blades (2).

While the lip (1) is descending, it rotates on its axle (4) together with the blades (2) attached on it. In some point the blades (2) reach the lower part of the deck (3) where slots (5) have been designed in a way that the blades (2) can pass through without leaving big gaps where human body parts can be entrapped.

When the lip (1) I totally descended, the blades (2) are totally protruded through the deck (3), creating a barrier for the vehicles.

When the lip (1) ascends once again the blades (2) pass through the slots (5), with finally reaching below the level of the deck (3).

## Claims

1. A dock leveler barriers mechanism, comprising:
a lip (1) of dock leveler,
blades (2) attached to the lower part of the lip,
an axle (4) which is the rotational axle for both the lip and the blades (2)
and a deck (3) which has slots designed on it in order the blades to pass through them creating a barrier when the lip is descended.

2. A dock leveler barriers mechanism in accordance with claim 1, wherein:
the blades (2) are attached on the lip (1) with bolds and the hole of the blade where the axle (4) pass through is not a closed shape, in order the blade (2) can be easily replaced without removing the axle (4) or the other blades (2).

3. A dock leveler barriers mechanism in accordance with claim 1, wherein:
Blades (2) and slots (5) have been designed in a way that the blades (2) can pass through without leaving big gaps where human body parts can be entrapped.
